# EUROPÄISCHE PATENTSCHRIFT

(11) **EP 1 105 204 B1**
(45) Veröffentlichungstag und Bekanntmachung des Hinweises auf die Patenterteilung: **04.06.2003**
(21) Anmeldenummer: 99945972.0
(22) Anmeldetag: 11.08.1999
(51) Int. Cl.: B01D 53/04, B01D 53/68, B01D 53/22

(54) **AUFTRENNUNG VON SF 6 ENTHALTENDEN GASEN**
SEPARATION OF GASES CONTAINING SF 6
DIVISION DE GAZ CONTENANT DU SF 6

(30) Priorität: 20.08.1998 DE 19837845; 11.03.1999 DE 19910678
(43) Veröffentlichungstag der Anmeldung: 13.06.2001
(73) Patentinhaber: Solvay Fluor und Derivate GmbH, 30173 Hannover (DE)
(72) Erfinder: PITTROFF, Michael, D-30161 Hannover (DE); SCHWARZE, Thomas, D-30173 Hannover (DE); BELT, Heinz-Joachim, D-30938 Burgwedel (DE); BARTHELEMY, Pierre, D-30171 Hannover (DE)
(74) Vertreter: Gosmann, Martin, Dr.
(86) Internationale Anmeldenummer: EP9905886
(87) Internationale Veröffentlichungsnummer: WO00010688

(56) Entgegenhaltungen:
- EP-A- 0 754 487
- US-A- 3 675 392
- US-A- 5 192 727
- US-A- 5 720 797

## Beschreibung

Die Erfindung bezieht sich auf ein Verfahren zur Auftrennung von Gasgemischen, die Schwefelhexafluorid (SF₆) enthalten.

SF₆ enthaltende Gase werden in der Technik für verschiedenste Zwecke eingesetzt. SF₆/N₂-Gemische bzw. SF₆/Edelgasgemische und SF₆/Luft-Gemische werden z. B. im Fensterbau als isolierendes Füllgas, in der Reifenindustrie als druckbeständiges, geräuschdämmendes Füllgas eingesetzt.

Gemische aus Schwefelhexafluorid und Stickstoff werden als isolierendes Füllgas für Erdkabel verwendet, siehe deutsches Gebrauchsmuster 297 20 507.2. Üblicherweise enthalten diese Gemische 5 bis 30 Vol. -% Schwefelhexafluorid, Rest auf 100 Vol.-% Stickstoff.

Gemische aus Schwefelhexafluorid und Luft sowie gegebenenfalls CO₂ werden verwendet als schützendes Gaspolster beim Gießen von Magnesium. In diesen Gemischen ist gewöhnlich SF₆ in einer Menge von 0,05 bis 1 Vol.-% enthalten.

Auch SF₆-haltige Abluft kann in der Industrie anfallen.

Es ist wünschenswert, diese Gemische nach ihrer Anwendung mit dem Ziel der Wiederverwendung des SF₆ aufzuarbeiten. Problematisch dabei ist, daß Stickstoff bzw. Luft einen wesentlichen Volumenanteil im Gasgemisch einnimmt und eine große Transportkapazität erfordert. Aufgabe der vorliegenden Erfindung ist es, ein Verfahren zur Auftrennung der o. a. Gasgemische anzugeben, welches bei der Wiederverwendung des SF₆ aus den Gemischen nur geringe Transportkapazität erfordert.

Eine weitere Aufgabe besteht in der Zurverfügungstellung einer geeigneten Vorrichtung zur Durchführung des erfindungsgemäßen Verfahrens.

Das erfindungsgemäße Verfahren zur Auftrennung von SF₆ enthaltenden Gasgemischen sieht vor, daß man das Gemisch mit hydrophoben Zeolithen mit einem SiO₂/Al₂O₃-Verhältnis ("Modul") von mindestens 80 und einem Porendurchmesser von 4 bis 7 Å (0,4 bis 0,7 nm) kontaktiert, um bevorzugt SF₆ zu adsorbieren. Der im wesentlichen SF₆-freie Stickstoff bzw. die SF₆-freie Luft kann in die Umwelt entlassen werden.

Diese einfache Art der Verfahrensdurchführung eignet sich besonders dann, wenn verhältnismäßig kleine Mengen an Gasgemisch aufgetrennt werden sollen oder wenn der SF₆-Gehalt gering ist, z. B. unterhalb 5 Vol.-%. Es ist deshalb besonders gut geeignet für die Gemische aus SF₆ und Luft sowie gegebenenfalls CO₂, die aus der Magnesium-Gießerei stammen und üblicherweise 0,05 bis 1 Vol.-% SF₆ enthalten. Sofern hier noch zusätzlich Verunreinigungen wie SO₂F₂, SO₂ etc. enthalten sind, kann vorab eine Reinigung erfolgen, wie Waschen mit Wasser oder Lauge oder Sorption mittels z. B. Al₂O₃. Auch für die Auftrennung von Füllgasen aus Isolierscheiben und Autoreifen ist diese Verfahrensdurchführung gut geeignet.

Beispielsweise saugt man das Schutzgas der Magnesium-Industrie mit 0,2 Vol.-% SF₆, Rest Luft und CO₂ ab und trennt die Luft ab. Das sorbierte SF₆ und CO₂ wird rückgeführt. Mit wenigen Kilogramm Adsorbermaterial kann praktisch die ganze Wochenproduktion an Abgas eines Schmelztiegels gereinigt werden. Magnesium kann deshalb weitaus umweltfreundlicher als bisher hergestellt werden. Die Desorbtionszeitdauer ist nicht länger oder sogar kürzer als die Sorbtionszeitdauer.

Zwar liegt bei Isoliergasscheiben der SF₆-Gehalt oft bei 10 Vol.-%, aber die Absauganlagen saugen oft Nebenluft an, so daß der effektive SF₆-Gehalt bei der Sorbtion geringer ist.

Eine Ausführungsform der Erfindung bezieht sich auf ein Verfahren zur Reinigung von SF₆-enthaltenden Gasen, insbesondere SF₆-verunreinigter Luft oder Abluft.

Dieser Aspekt der Erfindung beruht auf der Erkenntnis, daß mit den ausgewählten Zeolithen SF₆ generell aus Gasen abgetrennt werden kann.

Einfache Sorptionsversuche zeigen, ob für ein jeweiliges Gas, aus dem SF₆ entfernt werden soll, die Trennung im gewünschten Umfang eintritt. Sehr erfolgreich ist die Abtrennwirkung, wenn die Moleküle des Gases, aus welchem das SF₆ abgetrennt werden soll, größer oder kleiner als der Porendurchmesser des verwendeten Zeolithen sind. Auf diese Weise können z. B. Gase aus der Produktion gereinigt werden.

Die Methode kann auch zur Reinigung von Luft oder Abluft angewendet werden, welche mit SF₆ verunreinigt ist.

Die erfindungsgemäße Verbesserung liegt hier darin, die Reinigung von Luft oder Abluft zu bewirken, die mit SF₆ verunreinigt ist.

Sofern noch zusätzlich Verunreinigungen wie SO₂F₂, SO₂ etc. enthalten sind, kann vorab eine Reinigung erfolgen, wie Waschen mit Wasser oder Lauge oder Sorption mittels z. B. Al₂O₃.

Die Reinigung der Abluft, beispielsweise aus Anlagen, in denen SF₆ hergestellt oder verwendet wird, erfolgt aus Gründen des Umweltschutzes.

Die Reinigung von SF₆ enthaltender Luft kann wünschenswert sein, weil SF₆ auf technische Prozesse störend wirken kann. Ein Anwendungsgebiet ist deshalb die Reinigung der Luft, die in technischen Anlagen umgewälzt wird.

Der Gehalt an SF₆ in solcher Luft ist oft sehr gering (im ppm-Bereich). Deswegen kann üblicherweise auf die Vorschaltung einer Membrantrennung verzichtet werden. Außerdem ist es angesichts der geringen Mengen an SF₆ zwar möglich, die beladenen Sorbenzien zu regenerieren; sie können aber auch beladen deponiert werden.

Zur Verbesserung der Reinigungswirkung kann man selbstverständlich auch mehrere Adsorbtionsstufen (2, 3 oder mehr) hintereinanderschalten.

Diese erfindungsgemäße Ausführungsform zeichnet sich durch hohe Reinigungswirkung bei SF₆-kontaminierter Luft aus. Die gereinigte Abluft bzw. Luft kann unbedenklich in die Umwelt entlassen werden bzw. in Anlagen geleitet werden und als Umgebungsluft dienen, in welchen SF₆ als Kontamination gestört hätte.

Das Verfahren kann z. B. auch auf Luft oder Abluft angewendet werden, welcher SF₆ zugesetzt ist, z. B. als Tracer-Substanz. Auch Luft oder Abluft in SF₆ herstellenden oder anwendenden Betrieben kann gereinigt werden, wenn diese Luft oder Abluft mit SF₆ kontaminiert ist.

Eine bevorzugte Ausführungsform betrifft die Aufarbeitung von SF₆/N₂-Gemischen, anhand derer die Erfindung weiter erläutert wird.

Sollen größere Mengen aufgetrennt werden oder ist der SF₆-Gehalt größer, kann man das SF₆/N₂-Gemisch zunächst einer Tieftemperaturbehandlung unterwerfen. Vorzugsweise kühlt man das Gemisch auf eine Temperatur im Bereich von -70 °C bis -110 °C, insbesondere auf eine Temperatur im Bereich von -70 °C bis -100 °C ab. Es kondensiert dann SF₆ aus, das nur noch einen geringen Anteil an N₂ enthält. Außerdem verbleibt eine Gasphase, die überwiegend aus Stickstoff mit geringen Anteilen an SF₆ besteht. Die auf diese Weise erhaltene Gasphase wird dann wie oben beschrieben absorptiv aufgetrennt, so daß im wesentlichen von SF₆ freier Stickstoff erhalten wird und in die Umwelt entlassen werden kann. Das SF₆ kann recycelt werden.

Eine alternative, bevorzugte Ausführungsform für größere Mengen Gasgemisch bzw. solche Gasgemische, die einen höheren Gehalt an SF₆ aufweisen, wird im folgenden beschrieben. Diese Ausführungsform sieht die Kombination von Membrantrennverfahren und Adsorption vor. Sie eignet sich sehr gut für Gemische aus SF₆ und N₂, beispielsweise aus Erdkabeln, welche einen SF₆-Gehalt von 5 bis 30 Vol.-% aufweisen.

Diese Ausführungsform des erfindungsgemäßen Verfahren sieht vor, daß man ein SF₆/N₂-Gemisch in mindestens einer Membrantrennstufe in ein Retentat mit erhöhtem Gehalt an SF₆ und ein Permeat mit verringertem Gehalt an SF₆ auftrennt und das Permeat zur weiteren Auftrennung in mindestens eine Adsorptionsstufe mit den oben beschriebenen hydrophoben Zeolithen leitet. Bevorzugt ist es, zwei oder mehr Membrantrennstufen und zwei oder mehr Adsorptionsstufen vorzusehen.

Der Druck auf der Eingangsseite der Membran bzw. der Membranen liegt üblicherweise höher als der Umgebungsdruck. Beispielsweise kann man das zu trennende Gasgemisch mit einem Druck von bis zu 20 bar (2·10⁶ Pa) aufgeben. Sofern man mehrere Membranen vorsieht, ist vor jeder Membran ein Kompressor angeordnet. Das Permeat hat beim Eintritt in die Adsorberstufe dann üblicherweise einen Druck, der in etwa dem Umgebungsdruck entspricht. Gewünschtenfalls kann man das Permeat vor dem Eintritt in die Adsorberstufe komprimieren. Dies ist aber nicht notwendig. Am einfachsten ist es, das Permeat mit dem Druck in die Adsorberstufe zu geben, wie es aus der Membran resultiert. Der Druck liegt dann üblicherweise bis hin zu 4 bar (abs.) (4·10⁵ Pa) , vorzugsweise bis hin zu 2 bar (abs.) 2·10⁵ Pa.

Sofern man zwei Membrantrennstufen vorsieht, sieht man zweckmäßig folgende Führung der Gasströme vor: das zu trennende Gemisch - beispielsweise ein Gemisch von Schwefelhexafluorid und Stickstoff mit 20 Vol.-% SF₆ aus Erdkabeln - wird auf die erste Membran aufgegeben. Da die Membran Stickstoff bevorzugt passieren läßt, wird ein Permeat mit hohem Stickstoffanteil und niedrigem Schwefelhexafluoridanteil erhalten. Das Permeat wird in den Adsorber eingeleitet, bzw. in den ersten Adsorber; das den ersten Adsorber verlassende Gasgemisch wird dann in einen zweiten, sodann gegebenenfalls in einen dritten etc. Adsorber eingeleitet. Experimentell wurde gefunden, daß bereits nach Passieren einer Membran und zwei, mit hydrophoben Zeolithen gefüllten Adsorbern ein Stickstoff mit weniger als 10 ppm SF₆ erhalten wird. Das Retentat der ersten Membran wird in eine weitere Membran eingeleitet. Das aus dieser zweiten Membran resultierende Permeat wird in die erste Membran eingeleitet. Das Retentat aus der zweiten Membran stellt Schwefelhexafluorid mit geringen Mengen Stickstoff dar. Es kann nach Verflüssigung mit einem Kompressor zwischengespeichert, sofort wiederverwendet werden oder unter weiterer Anreicherung des Schwefelhexafluorids aufgearbeitet werden.

Das Verfahren kann bezüglich der Anzahl an Membranen und Adsorberstufen sehr flexibel durchgeführt werden. Je nachdem, wie weit die Abreicherung an SF₆ erfolgen soll, sieht man eine, zwei oder noch mehr Adsorberstufen vor.

Die Anzahl der Membranen und die Anordnung der Membrankartuschen richtet sich danach, ob ein Gas mit hohem oder niedrigem SF₆-Gehalt behandelt werden soll. Bei größerer Anzahl von Membranen ist der Trenneffekt größer, der SF₆-Gehalt im Permeat, das adsorptiv behandelt werden soll, geringer als bei Anwendung einer geringen Anzahl von Membranen. Der Adsorber kann dann entweder kleiner konstruiert werden, oder die Regeneration ist in längeren Intervallen nötig. Der apparative Aufwand kann allerdings höher sein (höhere Zahl an Kompressoren).

Es wurde festgestellt, daß bereits ein oder zwei Membrantrennstufen und ein oder zwei Adsorberstufen ausreichen, damit ein hochangereichertes Schwefelhexafluorid sowie ein Stickstoffgas mit allenfalls Spuren Schwefelhexafluorid erhalten werden können.

Bevorzugt sind organische, asymmetrische Membranen. Bekanntermaßen gibt es gummielastische Membranen ("Rubbery Membranes") die auf der Basis der Löslichkeit der Permeats trennen. Andere Membranen trennen aufgrund der Diffusionsfähigkeit des Permeats; dies sind nicht-gummielastische, eher kristalline Membranen ("Glassy Membranes"); diese letzteren Membranen sind bevorzugt. Die Membran kann in üblicher Form vorliegen. Membranen in Form eines Bündels von Hohlfasermembranen sind sehr gut geeignet. Das Membranmaterial kann beispielsweise aus Polysulfon, Polyetherimid, Polypropylen, Celluloseacetat, Polyimid, Polyamid, Polyaramid oder Ethylcellulose hergestellt sein, wie in der US-A 5,730,779 beschrieben. Andere brauchbare Membranen werden in der US-A 4,838,904 beschrieben. Sehr gut geeignet sind beispielsweise Polyimide, Polycarbonate, Polyester, Polyestercarbonate, Polysulfone, Polyethersulfone, Polyamide, Polyphenylenoxide und Polyolefine. Bevorzugt enthält das Polymermaterial Polyester, Polycarbonate und Polyestercarbonate. Hervorragend geeignet sind Polycarbonate, die von einem Bisphenol abgeleitet werden, in welchem mindestens 25 % der Bisphenoleinheiten in der Polymerkette tetrahalogeniert sind, wobei das Halogen Chlor oder Brom ist. Besonders bevorzugte Membranen weisen eine polymere Matrix auf, die zwei poröse Oberflächen aufweist und eine Schicht, die die Trennung des Schwefelhexafluorids von den anderen Gasbestandteilen ermöglicht. Derartige Membranen werden im US-Patent 4,838,904 (EP-A-0 340 262) beschrieben. Sofern im Gasgemisch noch zusätzliche Verunreinigungen wie SO₂F₂, SO₂ etc. enthalten sind, kann vorab eine Reinigung erfolgen, wie Waschen mit Wasser oder Lauge oder mit Adsorbern. Jede Membranstufe kann aus mehreren Membrankartuschen (parallel angeordnet) bestehen.

Der Druck auf der Eingangsseite der Membran bzw. der Membranen liegt üblicherweise höher als der Umgebungsdruck. Beispielsweise kann man das zu trennende Gasgemisch mit einem Druck von bis zu 13 bar (1,3·10⁶ Pa) aufgeben. Vorzugsweise liegt der Eingangsdruck bei 10 bis 12 bar (1 bis 1,2·10⁶ Pa). Sofern man mehrere Membranen vorsieht, kann vor jeder Membran ein Kompressor angeordnet sein. Die Temperatur liegt vorteilhaft bei 10 bis 40 °C.

Bei Anwendung dreier Membranstufen ist der Trenneffekt noch besser. Bevorzugt werden die drei Membranen folgendermaßen geschaltet: das SF₆/N₂-Gasgemisch wird auf die 1. Membranstufe als Feedstrom aufgegeben. Das Retentat wird als Feedstrom auf eine 2. Membranstufe aufgegeben. Das Retentat dieser 2. Stufe ist hochangereichertes SF₆ und wiederverwertbar. Das Permeat der 1. Membranstufe wird als Feedstrom auf die 3. Membranstufe aufgegeben. Das Permeat dieser 3. Stufe ist N₂, fast frei von SF₆ und wird nach Passieren des Adsorbers oder der Adsorber in die Umgebung entlassen. Das Permeat der 2. Membranstufe und das Retentat der 3. Membranstufe wird in den Feedstrom zur 1. Membranstufe eingeleitet.

Es wurde festgestellt, daß mit Zeolithen, die nicht dem erfindungsgemäßen Auswahlkriterium bezüglich Modul und Porengröße entsprechen, nur schlechtere oder gar keine Adsorption von Schwefelhexafluorid möglich ist, oder daß diese wesentlich unselektiver sind. Besonders vorteilhaft ist ein Porendurchmesser von 5 bis 6.5 Å (0,5 bis 0,65 nm).

Die Regenerierung der Adsorbenzien ist möglich, indem man den Druck absenkt (Druckwechseladsorption) und gegebenenfalls Wärme auf die belegten Adsorbenzien einwirken läßt. Das freigesetzte Schwefelhexafluorid kann beispielsweise dem Feedstrom in die Membrantrennanlage zugeleitet werden.

Das erfindungsgemäße Verfahren zeichnet sich durch optimale Aufspaltung des SF₆/N₂-Gemisches bzw. SF₆/Luft-Gemischen aus. Der gereinigte Stickstoff bzw. die gereinigte Luft kann unbedenklich in die Umwelt entlassen werden. Das rückgewonnene Schwefelhexafluorid kann entweder sofort oder nach weiterer Aufreinigung - gegebenenfalls verflüssigt - wiederverwendet werden. Die im erfindungsgemäßen Verfahren anzuwendende Vorrichtung kann mobil ausgeführt sein. In diesem Fall kann das Gasgemisch, das beispielsweise aus Erdkabeln stammt, an Ort und Stelle aufgetrennt werden.

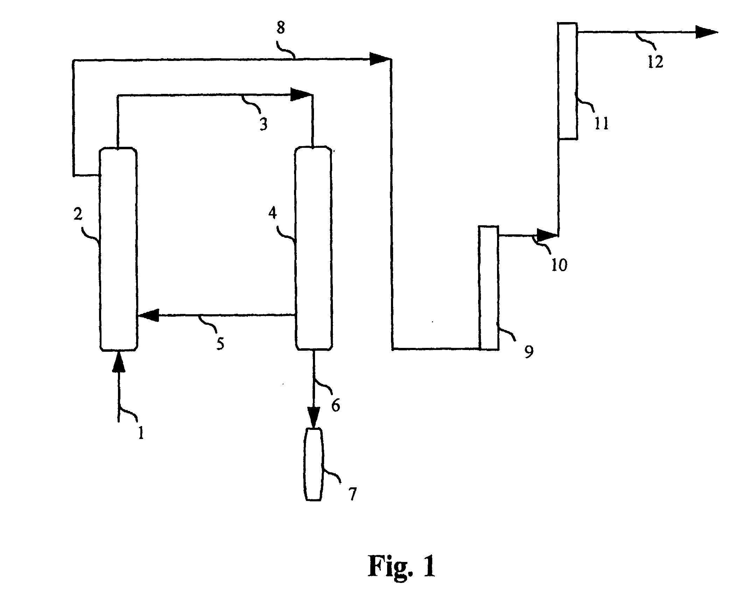

Zur Erfindung gehört auch eine Vorrichtung. Diese Vorrichtung zur Trennung von Schwefelhexafluorid/Stickstoffoder SF₆/Luft-Gemischen umfaßt eine, zwei, drei oder mehr Membrantrennstufen mit für Stickstoff oder Luft bevorzugt durchlässigen Membranen und ein, zwei, oder mehr Adsorber mit einer Schüttung von Zeolithen mit einem Siliciumdioxid/Aluminiumoxid-Verhältnis (Modul) von mindestens 80 und einem Porendurchmesser von 4 bis 7 Å (0,4 bis 0,7 nm). In bezug auf die Zahl der Membran- und Adsorberstufen gilt das oben Gesagte. Vor jeder Membranstufe ist ein Kompressor angeordnet. Eine bevorzugte Vorrichtung weist, wie in Figur 1 erläutert, zwei Membrantrennstufen und zwei Adsorberstufen auf. Sie umfaßt weiterhin eine Zuführungsleitung für das aufzutrennende Gasgemisch, die mit dem Eingang in die erste Membrantrennstufe verbunden ist, eine Verbindungsleitung zwischen erster und zweiter Membrantrennstufe, die zur Einleitung des Retentats aus der ersten Membrantrennstufe in die zweite Membrantrennstufe vorgesehen ist, eine Verbindungsleitung zwischen zweiter und erster Membrantrennstufe, die zur Einleitung des Permeats der zweiten Membrantrennstufe in die erste Membrantrennstufe vorgesehen ist, eine Abnahmeleitung für das Retentat aus der zweiten Membrantrennstufe, von welcher Retentat mit hohem SF₆-Gehalt abgenommen werden kann, eine Zuführungsleitung für das Permeat der ersten Membrantrennstufe in den ersten Adsorber, eine Zuführungsleitung für das den ersten Adsorber verlassende Gas in den zweiten Adsorber und eine Abnahmeleitung aus dem zweiten Adsorber für das im wesentlichen SF₆-freie Stickstoffgas (bzw. die SF₆-freie Luft).

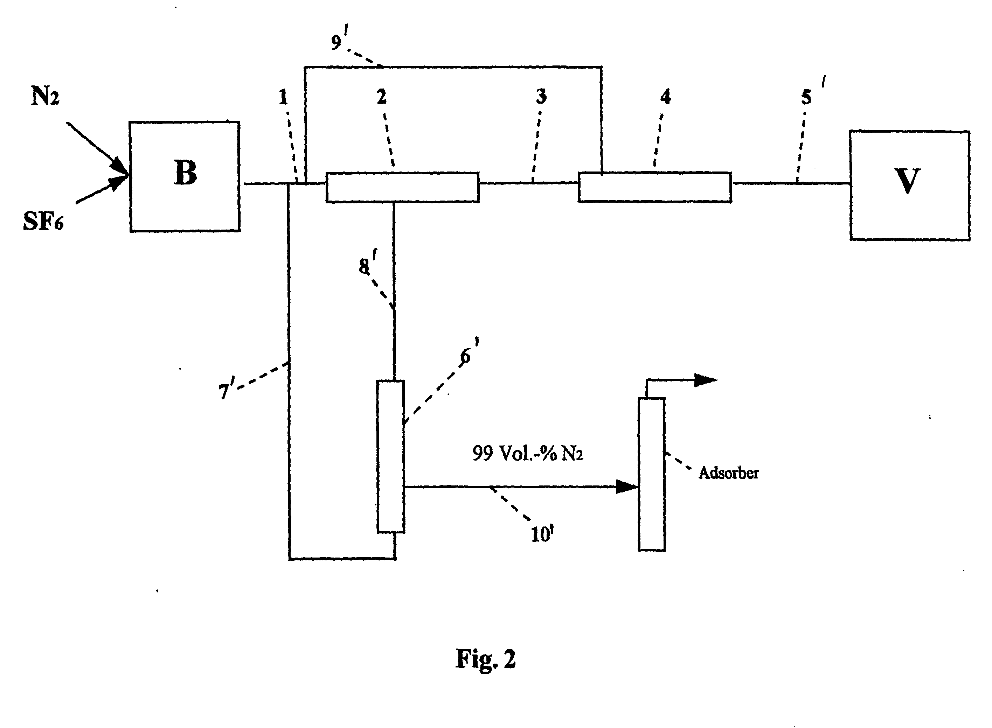

Ein weiteres, besonders bevorzugtes System umfaßt drei Membranstufen. Zweckmäßig sind sie wie weiter oben beschrieben geschaltet. Figur 2 erläutert es näher. Behälter B (symbolisiert die gasisolierte Leitung) weist ein Gemisch von N₂ und SF₆ auf. Durch die Leitung 1 wird das Gemisch in die 1. Membranstufe 2 geleitet. Das Retentat wird über Leitung 3 in die 2. Membranstufe 4 eingespeist. Das Retentat, hochangereichertes SF₆, der Membranstufe 4 wird über Leitung 5' in den Vorratsbehälter V (Zwischentank) eingeleitet. Das Permeat der 1. Membranstufe 2 wird in eine 3. Membranstufe 6' eingespeist, deren Permeat in den Adsorber (oder die Adsorber) eingeleitet werden kann. Das Retentat der 3. Membrantrennstufe wird über die Leitung 7' in den Feedstrom der 1. Membranstufe 2 eingeleitet wird. Auch das Permeat der 2. Membranstufe 4 wird, über Leitung 9', in den Feedstrom der 1. Membranstufe 2 eingeleitet. Kompressoren vor den Membranstufen, Sonden zur Probenanalytik, Durchflußmesser etc. sind der Übersichtlichkeit halber weggelassen.

Je nach Adsorberkapazität und Zahl der Membrantrennstufen kann auch lediglich eine Adsorberstufe vorgesehen sein. Zwei Adsorberstufen oder mehr sind vorteilhaft, da sie kontinuierliche Arbeitsweise gestatten, sofern sie parallel geschaltet sind.

Die Vorrichtung kann in mobiler Form angeordnet sein, beispielsweise aufgebaut auf der Ladefläche eines Kraftfahrzeuges (z. B. Lkw). Dann kann das erfindungsgemäße Verfahren an Ort und Stelle durchgeführt werden.

Die Erfindung wird anhand Beispiel 1 unter Bezugnahme auf Figur 1 weiter erläutert.

### Beispiel 1: Kombination von Membrantrennung und Sorption

Verwendet wurde eine Anlage mit zwei Membrantrennstufen und zwei hintereinandergeschalteten Adsorbern. Diese Anlage ist sehr kompakt (Raumbedarf: 30-Fuß-Container) und eignet sich zum Aufbau auf der Ladefläche beispielsweise eines Lkw. Der Einfachheit halber sind die Kompressoren vor jeder Membran weggelassen.

Die verwendeten Membranen waren vom Hohlfasertyp, Hersteller: Aga-Gas, Typ AVIR™. Verwendet wurde "Wessalith^{R} DAZ F20" der Firma Degussa. Es handelt sich um einen Zeolithen vom Pentasil-Typ, der einer Dealuminierung unterworfen wurde, um das Al₂O₃ im Gitter durch SiO₂ zu ersetzen und auf diese Weise das Modul zu erhöhen. Diese Art der Modifizierung wird auch bei anderen Zeolithen angewendet, um Al₂O₃ im Zeolithen durch SiO₂ zu ersetzen. Eine Methode sieht hierzu vor, den Zeolithen mit SiCl₄ zu kontaktieren, siehe auch W. Otten, E. Gail und T. Frey, Chem.-Ing.-Tech. 64 (1992), Nr. 10, Seiten 915 - 925, insbesondere Seiten 915 - 916.

Der verwendete Zeolith "Wessalith^{R} DAZ F20" besitzt ein Modul von über 1.000, eine Porenweite von 0,6 nm und eine Partikelgröße von 2 mm. 500 g dieses Adsorbens wurden eingesetzt.

Durch Vermischen von Stickstoff und Schwefelhexafluorid wurde ein Gasgemisch mit 20 Vol.-% SF₆ und 80 Vol.-% N₂ erzeugt,die einem beispielsweise in Erdkabeln verwendeten Gasgemisch entspricht. Das Gasgemisch mit einem Druck von 13 bar (abs.) (1,3·10⁶ Pa) wurde über die Leitung 1 in die erste Membrantrennstufe 2 eingeleitet (1 m³/h). Das die erste Membrantrennstufe verlassende Permeat enthielt 97 Vol.-% Stickstoff und 3 Vol.-% Schwefelhexafluorid und bei etwa Umgebungsdruck wurde über die Leitung 8 in den ersten Adsorber 9 und das den Adsorber verlassende Gasgemisch über die Leitung 10 in den zweiten Adsorber 11 eingeleitet. Über die Leitung 12 wurde ein Gas abgenommen, welches weniger als 10 ppm Schwefelhexafluorid enthielt.

Das Retentat der ersten Membrantrennstufe enthielt 50 Vol.-% Stickstoff und 50 Vol.-% Schwefelhexafluorid und wurde nach Verdichtung auf 13 bar über die Leitung 3 in die zweite Membrantrennstufe 4 eingeleitet. Das Permeat aus der zweiten Membrantrennstufe enthielt 81 Vol.-% Stickstoff und 19 Vol.-% Schwefelhexafluorid und wurde über die Leitung 5 in die erste Membrantrennstufe rückgeführt. Das Retentat der zweiten Membrantrennstufe enthielt 95 Vol.-% Schwefelhexafluorid und 5 Vol.-% Stickstoff. Es wurde über die Leitung 6 in einen Vorratsbehälter 7 eingeleitet. Dieses Produkt ist so rein, daß es unmittelbar zur Wiederverwendung des SF₆ verwendet werden kann. Gewünschtenfalls kann es aber auch weiter aufgereinigt werden.

Beispiel 1 wurde wiederholt, diesmal mit 3 Membranen. Das die 3. Membran verlassende Permeat wies noch 1 Vol.-% SF₆ auf, bevor es in die Adsorber geführt wurde. Entsprechend länger sind die Intervalle bis zur Regeneration.

### Beispiele 2 bis 13:

12 Zeolithe wurden auf ihre Eignung als Adsorbenzien zur Trennung von SF₆/N₂-Gemischen untersucht. Ein SF₆/N₂-Germisch mit etwa 1 Vol.-% SF₆ wurde über 2 in Reihe geschaltete Adsorber geleitet, die eine Schüttung von 500 ml des jeweiligen Adsorbens enthielten. Das Gemisch wurde durchgeleitet, bis etwa 10 g an SF₆ durchgeleitet waren. Das den 2. Adsorber verlassende Gemisch wurde gaschromatographisch untersucht und die SF₆-Konzentration bestimmt. Die 1. Versuchsreihe wurde bei Umgebungsdruck (1 bar) 1·10⁵ Pa durchgeführt.

In der folgenden Tabelle sind die untersuchten Adsorbenzien, ihre Charakteristika und eine Bewertung ihrer Adsorptionsleistung zusammengestellt. Dabei entspricht der Zeolith Nr. 1 dem Beispiel 2 etc.
** Hersteller:
Nr. 1, Nr. 4: Degussa AG;
Nr. 5: Bayer AG, Leverkusen;
Nr. 3, Nr. 7, Nr. 8: Chemie Uetikon GmbH,
   Uetikon (Schweiz) ;
Nr. 2: Sued-Chemie, München;
Nr. 6: W.R. Grace,Nd. Worms;
Nr. 9: Solvay; Nr. 10: UOP, Nd. Erkrath;
Nr. 11: Atochem Deutschland, Nd. Düsseldorf;
Nr. 12: Zeoline, Engis (Belgien)

1) Adsorber 1, gemessen nach 5 min.
2) Adsorber 2, gemessen nach 10 min.
3) Als Extrudat eingesetzt

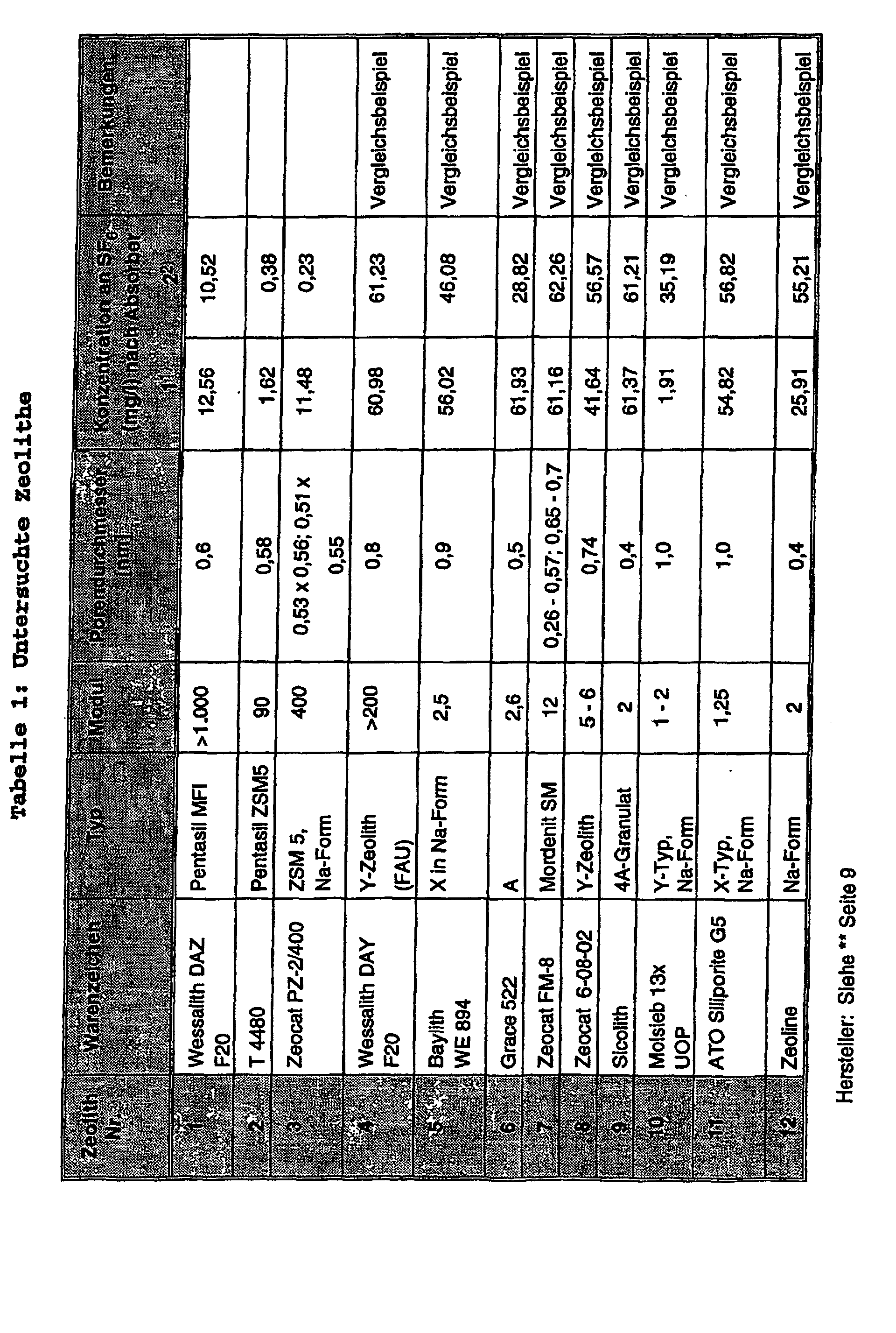

Die Tabelle zeigt, daß Zeolithe mit einem Modul >80 und einer Porenweite von 4 bis 7 nm bereits bei Umgebungsdruck gute Adsorptionsleistung zeigen.

Beobachtet wurde, daß bei den für das erfindungsgemäße Verfahren geeigneten Adsorbenzien die Adsorption von SF₆ verbessert wird, die Adsorption von N₂ jedoch verringert wird, wenn der Druck erhöht wird; die Selektivität nimmt also zu. Allerdings ist ein höherer apparativer Aufwand notwendig.

Die Beispiele 2 - 4 und 6 (Zeolithe Nr. 1 - 3 und 5) wurden wiederholt bei einem Druck von 2, 3 und 4 bar. Der Zeolith Nr. 3 zeigte bereits bei 1 bar so gute Werte, daß sie beim Arbeiten unter Druck nicht mehr verbessert wurden. Die anderen Zeolithe zeigten eine Verbesserung der Adsorption.

Weitere Tests bei einer SF₆-Konzentration von 2 und 4 Vol.-% ergaben, daß auch hier der Zeolith Nr. 3 die besten Ergebnisse lieferte.

## Patentansprüche

1. Verfahren zur Auftrennung von SF₆/N₂-Gemischen oder SF₆/Luft-Gemischen, wobei man das Gemisch in mindestens einer Adsorptionsstufe mit hydrophoben Zeolithen mit einem SiO₂/Al₂O₃-Verhältnis von mindestens 80 und einem Porendurchmesser von 4 bis 7 Å (0,4 bis 0,7 nm) kontaktiert, um SF₆ bevorzugt zu adsorbieren und an SF₆ verarmtes N₂ oder an SF₆ verarmte Luft zu gewinnen.

2. Verfahren nach Anspruch 1, **dadurch gekennzeichnet, daß** man hydrophoben Zeolith mit einem Porendurchmesser von 5 bis 6,5 Å (0,5 bis 0,65 nm) verwendet.

3. Verfahren nach Anspruch 1, **dadurch gekennzeichnet, daß** man die Adsorption bei einem Druck von maximal 5 atm (abs.) 5·10⁵ Pa durchführt.

4. Verfahren nach Anspruch 1, **dadurch gekennzeichnet, daß** man das Verfahren zur Abtrennung von SF₆ aus SF₆ enthaltenden Gasen anwendet.

5. Verfahren nach Anspruch 4, **dadurch gekennzeichnet, daß** man SF₆ enthaltende Abluft oder Abgase, Abgase der Magnesiumindustrie, Isoliergas aus Fensterscheiben oder Füllgas aus Reifen einsetzt.

6. Verfahren nach Anspruch 1, **dadurch gekennzeichnet, daß** man das Gemisch zunächst in mindestens einer Membrantrennstufe in ein Retentat mit erhöhtem Gehalt an SF₆ und ein Permeat mit verringertem Gehalt an SF₆ auftrennt und das Permeat zur weiteren Auftrennung in mindestens einer Adsorptionsstufe mit hydrophobem Zeolith mit einem SiO₂/Al₂O₃-Verhältnis von mindestens 80 und einem Porendurchmesser von 4 bis 7 Å (0,4 bis 0,7 nm) kontaktiert, um SF₆ bevorzugt zu adsorbieren.

7. Verfahren nach Anspruch 1 oder 6, **dadurch gekennzeichnet, daß** man von einem SF₆/N₂-Gemisch mit einem SF₆-Gehalt von 5 bis 30 Vol.-% oder einem SF₆/Luft-Gemisch von 0,05 bis 2 % ausgeht.

8. Verfahren nach Anspruch 6 oder 7, **dadurch gekennzeichnet, daß** man zwei oder mehr Membrantrennstufen und zwei oder mehr Adsorptionsstufen vorsieht.

9. Verfahren nach Anspruch 8, **dadurch gekennzeichnet, daß** man zwei Membrantrennstufen vorsieht, das Retentat der ersten Membrantrennstufe der zweiten Membrantrennstufe zuführt, um aus der zweiten Membranstrennstufe als Retentat ein Gemisch mit erhöhtem SF₆-Gehalt zu gewinnen, man das Permeat der zweiten Membrantrennstufe mit erhöhtem N₂-Gehalt oder Luft-Gehalt in die erste Membrantrennstufe rückführt und man das Permeat der ersten Membrantrennstufe mit hohem N₂-Gehalt oder Luft-Gehalt einer, zwei oder mehr Adsorberstufen zuführt, um N₂ oder Luft mit stark abgereichertem SF₆-Gehalt zu gewinnen.

10. Verfahren nach Anspruch 9, **dadurch gekennzeichnet, daß** man zwei Adsorberstufen vorsieht, um bei Umgebungsdruck N₂ oder Luft mit weniger als 10 ppm SF₆ zu gewinnen.

11. Vorrichtung zur Trennung von SF₆/N₂-Gemischen, umfassend 1, 2, 3 oder mehr Membrantrennstufen mit für N₂ bevorzugt durchlässigen Membranen und 1, 2 oder mehr Adsorber mit einer Schüttung von Zeolithen mit einem SiO₂/Al₂O₃-Verhältnis von mindestens 80 und einem Porendurchmesser von 4 bis 7 Å (0,4 bis 0,7 nm).

12. Vorrichtung nach Anspruch 11 mit 2 Membrantrennstufen und 2 Adsorberstufen, umfassend eine Zuführungsleitung (1) für das aufzutrennende Gasgemisch in die erste Membrantrennstufe (2), eine verbindungsleitung (3) für das Retentat zur Einleitung in die zweite Membrantrennstufe (4) eine Verbindungsleitung (5) zwischen zweiter und erster Membrantrennstufe zur Einleitung des Permeats der zweiten Membrantrennstufe in die erste Membrantrennstufe, eine Abnahmeleitung (6) für das Retentat aus der zweiten Membrantrennstufe mit hohem SF₆-Gehalt, eine Zuführungsleitun (8) für das Permeat der ersten Membrantrennstufe in den ersten Adsorber (9), eine Zuführungsleitung (10) für das den ersten Adsorber verlassende Gas in den zweiten Adsorber (11) und eine Abnahmeleitung (12) aus dem zweiten Adsorber (11) für das im wesentlichen SF₆-freie N₂-Gas.

13. Vorrichtung nach Anspruch 11, umfassend eine dritte Membrantrennstufe (6') mit einer Verbindungsleitung (10') für das Permeat der dritten Membrantrennstufe (6') zur Einleitung in den Adsorber, eine Verbindungsleitung (7') zur Einleitung des Retentats der dritten Stufe in die erste Membrantrennstufe (2), einer Verbindungsleitung (8') zur Einleitung des Permeats der ersten Membrantrennstuf (2) in die dritte Membrantrennstufe (6') und eine Verbindungsleitung (9') zur Einleitung des Permeats der zweiten Membrantrennstufe (4) in die erste Membrantrennstufe (2).

14. Vorrichtung nach einem der Ansprüche 11 bis 13 in mobiler Form, beispielsweise aufgebaut auf einem Kraftfahrzeug.

## Claims

1. A process for separating SF₆/N₂ mixtures or SF₆/air mixtures, in which the mixture is contacted in at least one adsorption stage with hydrophobic zeolites having an SiO₂/Al₂O₃ ratio of at least 80 and a pore diameter of 4 to 7 Å (0.4 to 0.7 nm) in order preferentially to adsorb SF₆ and to recover N₂ depleted in SF₆ or air depleted in SF₆.

2. A process according to Claim 1, **characterised in that** hydrophobic zeolite having a pore diameter of 5 to 6.5 Å (0.5 to 0.65 nm) is used.

3. A process according to Claim 1, **characterised in that** the adsorption is performed at a pressure of at most 5 atm (absolute) (5x10⁵ Pa).

4. A process according to Claim 1, **characterised in that** the process is used for separating off SF₆ from SF₆-containing gases.

5. A process according to Claim 4, **characterised in that** SF₆-containing exhaust air or exhaust gases, exhaust gases from the magnesium industry, insulating gas from window panes or filler gas from tyres is used.

6. A process according to Claim 1, **characterised in that** the mixture is first separated in at least one membrane separation stage into a retentate having an increased content of SF₆ and a permeate having a reduced content of SF₆ and the permeate for further separation in at least one adsorption stage is contacted with hydrophobic zeolite having an SiO₂/Al₂O₃ ratio of at least 80 and a pore diameter of 4 to 7 Å (0.4 to 0.7 nm) in order preferentially to adsorb SF₆.

7. A process according to Claim 1 or 6, **characterised in that** the starting point is an SF₆/N₂ mixture having an SF₆ content of 5 to 30% by volume or an SF₆/air mixture of 0.05 to 2%.

8. A process according to Claim 6 or 7, **characterised in that** two or more membrane separation stages and two or more adsorption stages are provided.

9. A process according to Claim 8, **characterised in that** two membrane separation stages are provided, the retentate of the first membrane separation stage is fed to the second membrane separation stage in order to obtain a mixture having an increased SF₆ content as retentate from the second membrane separation stage, the permeate of the second membrane separation stage is returned into the first membrane separation stage with an increased N₂ content or air content and the permeate of the first membrane separation stage with a high N₂ content or air content is fed to one, two or more adsorber stages in order to obtain N₂ or air with a greatly depleted SF₆ content.

10. A process according to Claim 9, **characterised in that** two adsorber stages are provided in order to obtain N₂ or air containing less than 10 ppm SF₆ at ambient pressure.

11. An apparatus for separating SF₆/N₂ mixtures, comprising 1, 2, 3 or more membrane separation stages with membranes which are preferentially permeable to N₂ and 1, 2 or more adsorbers with a bed of zeolites having an SiO₂/Al₂O₃ ratio of at least 80 and a pore diameter of 4 to 7 Å (0.4 to 0.7 nm).

12. An apparatus according to Claim 11 with 2 membrane separation stages and 2 adsorber stages, comprising a line (1) for feeding the gas mixture to be separated into the first membrane separation stage (2), a connecting line (3) for the retentate for introduction into the second membrane separation stage (4), a connecting line (5) between the second and first membrane separation stages for introducing the permeate of the second membrane separation stage into the first membrane separation stage, a line (6) for removing the retentate from the second membrane separation stage with a high SF₆ content, a line (8) for feeding the permeate of the first membrane separation stage into the first adsorber (9), a line (10) for feeding the gas leaving the first adsorber into the second adsorber (11) and a line (12) for removing the substantially SF₆-free N₂ gas from the second adsorber (11).

13. An apparatus according to Claim 11, comprising a third membrane separation stage (6') with a connecting line (10') for the permeate of the third membrane separation stage (6') for introduction into the adsorber, a connecting line (7) for introducing the retentate of the third stage into the first membrane separation stage (2), a connecting line (8') for introducing the permeate of the first membrane separation stage (2) into the third membrane separation stage (6') and a connecting line (9') for introducing the permeate of the second membrane separation stage (4) into the first membrane separation stage (2).

14. An apparatus according to one of Claims 11 to 13 in mobile form, for example constructed on board a motor vehicle.

## Revendications

1. Procédé de séparation de mélanges SF₆/N₂ ou de mélanges SF₆/air, dans lequel on met en contact le mélange, dans au moins un étage d'adsorption, avec des zéolites hydrophobes présentant un rapport SiO₂/Al₂O₃ d'au moins 80 et un diamètre des pores de 4 à 7 Å (0,4 à 0,7 nm), pour adsorber préférentiellement le SF₆, et pour obtenir un N₂ appauvri en SF₆ ou un air appauvri en SF₆.

2. Procédé selon la revendication 1, **caractérisé en ce qu'**on utilise une zéolite. hydrophobe ayant un diamètre des pores de 5 à 6,5 Å (0,5 à 0,65 nm).

3. Procédé selon la revendication 1, **caractérisé en ce qu'**on met en oeuvre l'adsorption sous une pression absolue maximale de 5 atm. (5.10⁵ Pa).

4. Procédé selon la revendication 1, **caractérisé en ce qu'**on utilise le procédé pour séparer le SF₆ de gaz contenant le SF₆.

5. Procédé selon la revendication 4, **caractérisé en ce qu'**on utilise de l'air d'évacuation ou des effluents gazeux contenant du SF₆, des effluents gazeux de l'industrie du magnésium, un gaz isolant provenant de vitres de fenêtres, ou un gaz de remplissage provenant de pneus.

6. Procédé selon la revendication 1, **caractérisé en ce qu'**on sépare le mélange d'abord dans au moins un étage de séparation sur membrane, en un rétentat ayant une teneur élevée en SF₆ et un perméat ayant une teneur réduite en SF₆, et, pour assurer une séparation plus poussée, on met le perméat en contact, dans au moins un étage d'adsorption, avec une zéolite hydrophobe présentant un rapport SiO₂/Al₂O₃ d'au moins 80 et un diamètre des pores de 4 à 7 Å (0,4 à 0,7 nm), pour assurer une adsorption préférentielle du SF₆.

7. Procédé selon la revendication 1 ou 6, **caractérisé en ce qu'**on part d'un mélange SF₆/N₂ ayant une teneur en SF₆ de 5 à 30 % en volume, ou d'un mélange SF₆/air de 0,05 à 2 %.

8. Procédé selon la revendication 6 ou 7, **caractérisé en ce qu'**on prévoit deux étages de séparation sur membrane ou plus et deux étages d'adsorption ou plus.

9. Procédé selon la revendication 8, **caractérisé en ce qu'**on prévoit deux étages de séparation sur membrane, qu'on envoie le rétentat du premier étage de séparation sur membrane au deuxième étage de séparation sur membrane, pour obtenir sous forme d'un rétentat en sortie du deuxième étage de séparation sur membrane un mélange à haute teneur en SF₆, qu'on renvoie le perméat du deuxième étage de séparation sur membrane, ayant une haute teneur en N₂ ou une haute teneur en air, dans le premier étage de séparation sur membrane, et qu'on envoie le perméat du premier étage de séparation sur membrane, à haute teneur en N₂ ou à haute teneur en air, à un, deux étages d'adsorption ou plus, pour obtenir un N₂ ou un air ayant une teneur fortement appauvrie en SF₆.

10. Procédé selon la revendication 9, **caractérisé en ce qu'**on prévoit deux étages d'adsorption, pour obtenir sous la pression ambiante un N₂ ou un air contenant moins de 10 ppm de SF₆.

11. Appareillage pour séparer des mélanges SF₆/N₂, comprenant 1, 2 ou 3 étages de séparation sur membrane, ou plus, ayant des membranes de préférence perméables au N₂, et 1 ou 2 adsorbeurs, ou plus, contenant une masse de zéolites présentant un rapport SiO₂/Al₂O₃ d'au moins 80 et un diamètre des pores de 4 à 7 Å (0,4 à 0,7 nm).

12. Appareillage selon la revendication 11, comportant deux étages de séparation sur membrane et deux étages d'adsorption, comportant une conduite d'amenée (1) pour envoyer le mélange gazeux à séparer dans le premier étage de séparation sur membrane (2), une conduite de liaison (3) pour le rétentat, pour l'envoyer dans le deuxième étage de séparation sur membrane (4), une conduite de liaison (5) entre le deuxième et le premier étages de séparation sur membrane, pour envoyer le perméat du deuxième étage de séparation sur membrane au premier étage de séparation sur membrane, une conduite de soutirage (6) pour le rétentat provenant du deuxième étage de séparation sur membrane, à haute teneur en SF₆, une conduite d'amenée (8), pour envoyer le perméat du premier étage de séparation sur membrane au premier adsorbeur (9), une conduite d'amenée (10) pour envoyer le gaz sortant du premier adsorbeur dans le deuxième adsorbeur (11), et une conduite de soutirage (12) provenant du deuxième adsorbeur (11) pour le gaz N₂ essentiellement exempt de SF₆.

13. Appareillage selon la revendication 11, comprenant un troisième étage de séparation sur membrane (6'), avec une conduite de liaison (10') pour le perméat du troisième étage de séparation sur membrane (6'), pour l'envoyer dans l'adsorbeur, une conduite de liaison (7) pour envoyer le rétentat du troisième étage au premier étage de séparation sur membrane (2), une conduite de liaison (8') pour envoyer le perméat du premier étage de séparation sur membrane (2) au troisième étage de séparation sur membrane (6'), et une conduite de liaison (9') pour envoyer le perméat du deuxième étage de séparation sur membrane (4) au premier étage de séparation sur membrane (2).

14. Appareillage selon l'une des revendications 11 à 13 sous forme mobile, par exemple monté sur un véhicule à moteur.
